# EUROPEAN PATENT SPECIFICATION

(11) **EP 4 502 411 B1**
(45) Date of publication and mention of the grant of the patent: **09.09.2026**
(21) Application number: 23779152.0
(22) Date of filing: 28.02.2023
(51) Int. Cl.: F16D 3/2245, F16D 3/20

(54) **FIXED-TYPE CONSTANT-VELOCITY UNIVERSAL JOINT**
FESTGLEICHLAUF-UNIVERSALGELENK
JOINT UNIVERSEL HOMOCINÉTIQUE DE TYPE FIXE

(30) Priority: 28.03.2022 JP 2022051637
(43) Date of publication of application: 05.02.2025
(73) Proprietor: NTN Corporation, Osaka-shi Osaka 530-0005 (JP)
(72) Inventor: KOBAYASHI, Tomoshige, Iwata-shi Shizuoka 438-8510 (JP)
(74) Representative: Grünecker Patent- und Rechtsanwälte PartG mbB
(86) International application number: PCT/JP2023/007431
(87) International publication number: WO 2023/189122

(56) References cited:
- JP-A- 2002 005 186
- JP-A- 2002 188 653
- JP-A- 2013 032 813
- JP-A- 2013 032 813
- JP-A- 2015 175 475
- JP-A- 2018 044 608
- JP-A- 2021 011 911
- JP-B2- 3 931 020
- US-A1- 2006 217 207
- US-A1- 2017 023 069

## Description

### TECHNICAL FIELD

The present invention relates to a fixed type constant velocity universal joint.

### BACKGROUND ART

In general, a drive shaft of an automobile includes an outboard-side constant velocity universal joint attached to a wheel, an inboard-side constant velocity universal joint attached to a differential gear, and an intermediate shaft connecting both the constant velocity universal joints. Normally, a fixed type constant velocity universal joint that assumes a large operating angle but is not axially displaced is used as the outboard-side constant velocity universal joint. On the other hand, as the inboard-side constant velocity universal joint, a plunging type constant velocity universal joint is used which assumes a relatively small maximum operating angle but can be displaced axially while assuming the operating angle.

In recent years, reduction in size and weight of a drive shaft is required along with reduction in fuel consumption of an automobile, and reduction in size and weight of a constant velocity universal joint provided in the drive shaft is also required. For example, the following Patent Literatures 1 and 2 show a fixed type constant velocity universal joint in which the number of balls is eight to achieve miniaturization and weight reduction while securing strength, load capacity, and durability equal to or higher than those in a case where the number of balls is six.

Incidentally, in the constant velocity universal joint, when the fastening allowance (negative gap) between a pocket of a cage and the ball is excessively large, the force for restraining the ball increases, and a rolling motion accompanied by sliding occurs at a contact portion between the ball and a track groove, which causes an increase in temperature inside the joint and a decrease in life due to the increase in temperature. On the other hand, when the play (positive gap) between the pocket of the cage and the ball is excessively large, joint performance is adversely affected, for example, a noise is generated between the pocket and the ball, or vibration is increased. In addition, since wear occurs on a wall surface of the pocket due to contact with the ball, the positive gap may become excessively large due to use even if the wear does not occur at an initial stage. Furthermore, variations in dimensions within manufacturing tolerances are unavoidable in dimensions of each component.

In consideration of these points, in the conventional six-ball fixed type constant velocity universal joint, an initial pocket gap (H-D_{BALL}) represented by a difference between an axial width H of the pocket of the cage and a diameter D_{BALL} of the ball is set within a range of -50 µm to -10 µm. On the other hand, in the eight-ball fixed type constant velocity universal joint, a load applied to one ball is smaller than a load applied to the six-ball fixed type constant velocity universal joint, and a wear amount of an inner wall (pocket surface) of the pocket in contact with the ball is reduced. As a result, the initial pocket gap of the eight-ball fixed type constant velocity universal joint can be shifted to a plus side as compared with the initial pocket gap of the six-ball fixed type constant velocity universal joint. Specifically, in the following Patent Literature 2, the initial pocket gap of the eight-ball fixed type constant velocity universal joint is set to -30 µm to +10 µm.

Patent Literature 3 below discloses that in a fixed type constant velocity universal joint having a low normal angle (3° to 6°) used for a drive shaft of a sedan-type passenger car, (1) a pocket gap is set as a positive gap, and (2) a specific grease is used for the purpose of reducing a torque loss and improving durability without impairing excellent noise, vibration, and harshness (NVH) performance. Specifically, the initial pocket gap is larger than 0 µm and +20 µm or less, and grease having consistency number 1 to 2 and mixing stability of 390 to 440 is used.

Further examples relating to constant velocity universal joints are disclosed in JP 2018 044608 A, JP 2013 032813 A, US 2006/217207 A1 and JP 2002 188653 A.

### CITATIONS LIST

### PATENT LITERATURE

Patent Literature 1: JP 3460107 B2
Patent Literature 2: JP 3931020 B2
Patent Literature 3: JP 6328452 B2

### SUMMARY OF INVENTION

### TECHNICAL PROBLEMS

An electric vehicle (a vehicle that has wheels driven by an electric motor and includes a hybrid vehicle (the same applies hereinafter)) is more responsive and quieter than a vehicle driven by a conventional engine. Therefore, in an electric vehicle, it is required to reduce backlash of a power transmission system including a constant velocity universal joint and further improve NVH performance. However, it cannot be said that the fixed type constant velocity universal joint as disclosed in Patent Literatures 1 to 3 can sufficiently satisfy the performance required for an electric
vehicle.

Therefore, an object of the present invention is to provide a fixed type constant velocity universal joint suitable for an electric vehicle.

### SOLUTIONS TO PROBLEMS

In the present invention, in the eight-ball fixed type constant velocity universal joint using the grease described in Patent Literature 3, that is, the grease (hereinafter, also referred to as "specific grease") having consistency number 1 to 2 and mixing stability of 390 to 440, the range of the initial pocket gap has been reviewed in consideration of the following required characteristics associated with electrification of the vehicle and the like.

### (1) Reduction in backlash

When the pocket gap is excessively large, backlash increases, and abnormal noise during operation increases. Paragraphs 0052 to 0054 of Patent Literature 3 describe that by setting the pocket gap to 20 µm or less, the abnormal sound is at a level that cannot be detected by an actual vehicle. In order to suppress generation of abnormal noise, the present invention is also intended to prevent the pocket gap from exceeding 20 µm. On the other hand, since the pocket surface wears and the pocket gap widens due to long-term use, it is necessary to set the initial pocket gap in advance in consideration of the wear amount of the pocket surface. For example, in a test described in paragraph 0024 of Patent Literature 2, a wear depth after 650 hours of operation is 10.0 µm or 11.9 µm, but in this test, a use condition in the actual vehicle is not considered. Therefore, the present inventor has conducted an evaluation test assuming the use condition in the actual vehicle, and has found that the wear amount of the pocket surface at the time of traveling 100,000 km is about 20 µm at maximum.

### (2) Torque loss rate

A torque loss rate is a reduction rate (Tᵢₙ-Tₒᵤₜ)·100/Tᵢₙ of an output torque Tₒᵤₜ with respect to an input torque Tᵢₙ of the constant velocity universal joint. The present inventor has verified, by simulation, a change in a torque loss rate when the pocket gap is varied in an eight-ball Rzeppa type constant velocity universal joint (see FIGS. 1 and 2). FIG. 6 shows a result when the operating angle is 6°, and FIG. 7 shows a result when the operating angle is 9°. As is clear from these figures, when the fastening allowance (negative gap) between the pocket and the ball is increased, a friction between the ball and the pocket increases, and the torque loss rate increases particularly when the input torque is small. Therefore, the friction between the ball and the pocket is suppressed by using the specific grease, and the torque loss rate can be suppressed. Therefore, from the viewpoint of reducing the torque loss rate, it can be said that the pocket gap can be set to the negative gap by using the specific grease described above.

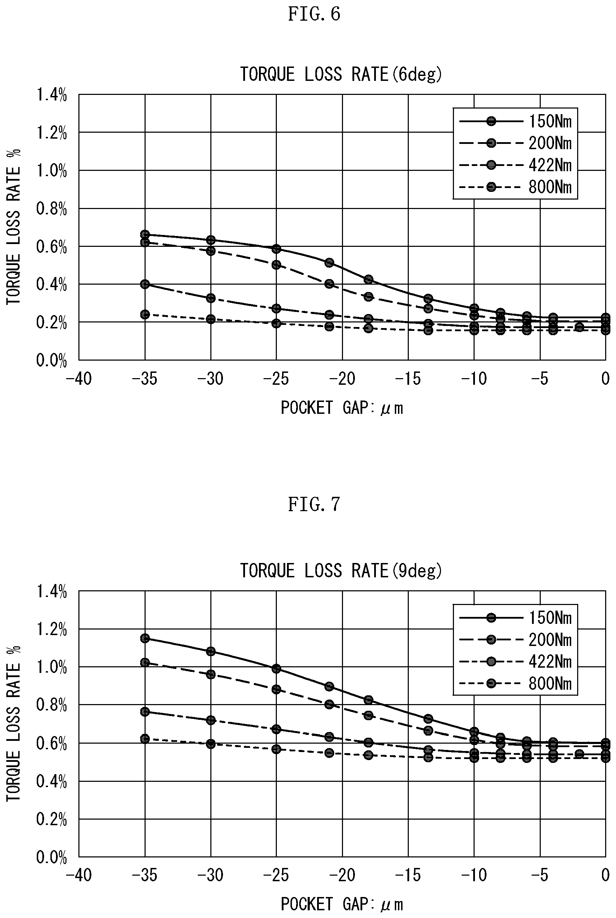

On the other hand, the torque loss rate decreases as the fastening allowance between the pocket and the ball decreases, that is, as the negative gap approaches 0. However, when the pocket gap is in a range of -6 µm or more, the torque loss rate is substantially constant even in a case of low torque (150 Nm). This is considered to be because the ball presses the pocket surface at the time of torque transmission to deform the pocket surface, and the pocket gap is substantially widened. From this result, it can be said that not only the wear amount of the pocket surface as described in (1) above but also deformation of the pocket surface at the time of torque transmission should be considered when an upper limit of the pocket gap is set. Specifically, from an upper limit value 20 µm of the pocket gap shown in (1) above, a maximum wear amount 20 µm of the pocket surface at the time of traveling 100,000 km, and a deformation amount 6 µm of the pocket surface at the time of torque transmission obtained from the verification results of FIGS. 6 and 7, it has become clear that an upper limit value of the initial pocket gap is calculated by a pocket gap upper limit value (20 µm) - a pocket surface maximum wear amount (20 µm) - a pocket surface deformation amount (6 µm), and is only required to be specifically -6 µm.

### (3) Rotation fluctuation rate

The rotation fluctuation rate is a fluctuation rate|Rᵢₙ-Rₒᵤₜ|·100/Rᵢₙ of a rotation speed Rₒᵤₜ of the joint member (for example, the inner joint member) on an output side with respect to a rotation speed Rin of the joint member (for example, an outer joint member) on an input side of the constant velocity universal joint. In the constant velocity universal joint, constant velocity of both the joint members is secured by arranging the ball on a bisector of an axial center of both the joint members by the cage. However, when the ball deviates from the bisector of both the joint members due to factors such as an internal gap of the constant velocity universal joint, the constant velocity of both the joint members collapses. When the constant velocity is lost, that is, when the rotation fluctuation rate becomes large, a minute increase or decrease (rotation unevenness) of the rotation speed occurs particularly when the rotation is performed in a state where the operating angle is large.

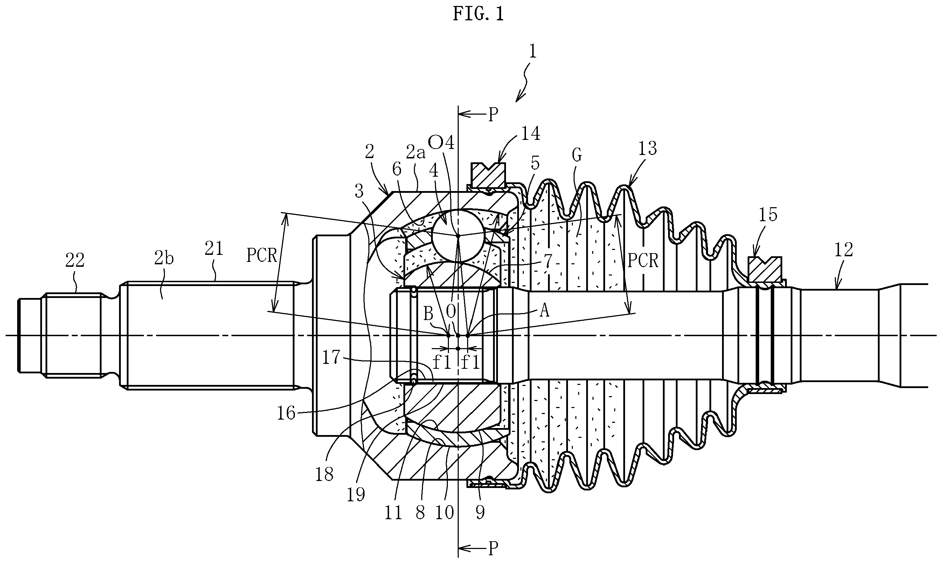

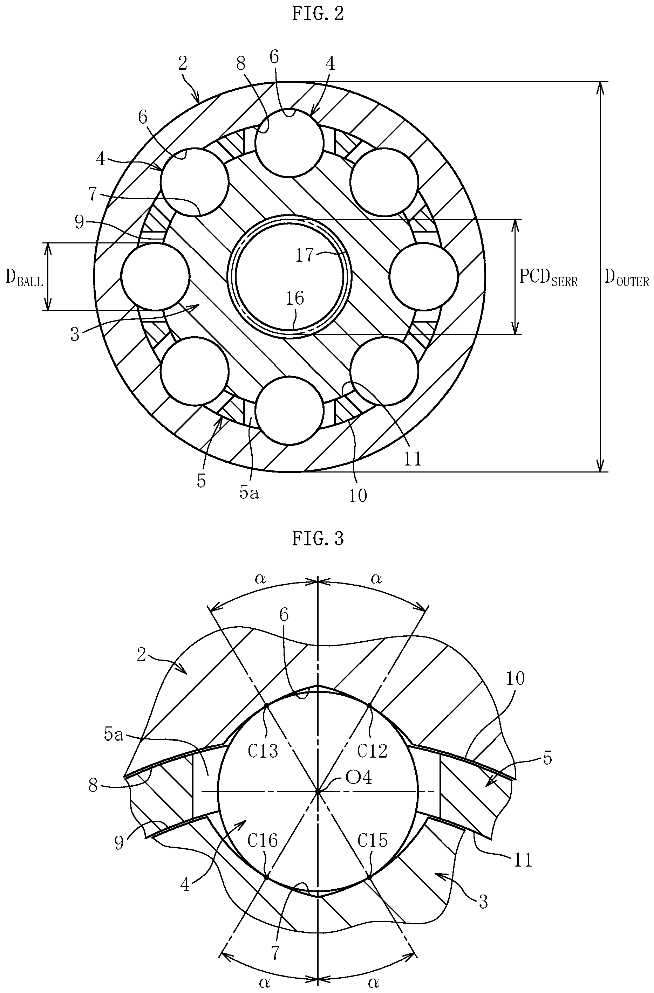

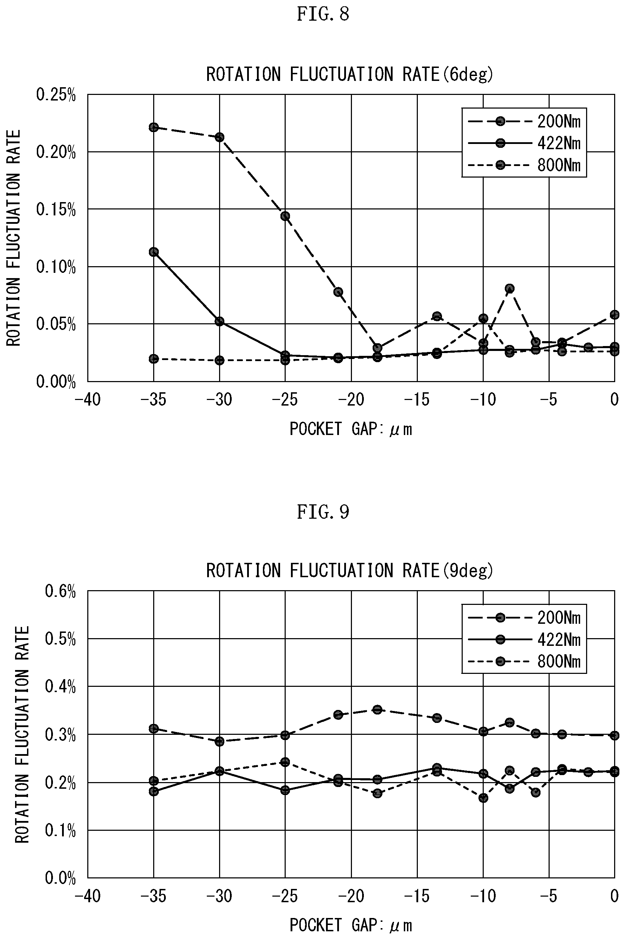

The present inventor has verified, by simulation, a change in the rotation fluctuation rate when the pocket gap is varied in the eight-ball Rzeppa type constant velocity universal joint (see FIGS. 1 and 2). The rotation fluctuation rate when the operating angle is 9° shown in FIG. 9 is larger than the rotation fluctuation rate when the operating angle is 6° shown in FIG. 8, but does not change much even though the pocket gap is changed. On the other hand, as for the rotation fluctuation rate when the operating angle is 6° as shown in FIG. 8, particularly at a low torque (200 Nm), the rotation fluctuation rate when the pocket gap is small (when the fastening allowance is large) is greatly increased as compared with the rotation fluctuation rate when the pocket gap is large (when the fastening allowance is small).

This is considered to be due to the following reasons. When the fastening allowance between the ball and the pocket is large, the ball is less likely to move in the pocket. For example, when the operating angle is large or when a transmission torque is large, a large force acts between components of the constant velocity universal joint, and a movement resistance in the pocket of the ball as described above has a small influence on rotational performance of the constant velocity universal joint. On the other hand, when the operating angle and the transmission torque are small, the force acting between the components of the constant velocity universal joint becomes small, and thus, it is considered that the movement resistance in the pocket of the ball as described above easily affects the rotational performance of the constant velocity universal joint, and as a result, the rotation fluctuation rate becomes large.

In a vehicle driven by an engine, since there is vibration of the engine, an occupant hardly feels a slight change (rotation unevenness) in the rotation speed of the constant velocity universal joint as described above. However, in an electric vehicle without vibration of the engine, there is a possibility that the slight rotation unevenness of the constant velocity universal joint as described above affects the NVH performance. Therefore, in order to satisfy the NVH performance required for the electric vehicle, it is necessary to suppress the rotation fluctuation rate as much as possible. Specifically, when the pocket gap is -21 µm or more, the rotation fluctuation rate when the operating angle is 6° and the input torque is 200 Nm can be suppressed to 0.1% or less.

A fixed type constant velocity universal joint of the present invention made on the basis of the above findings is a fixed type constant velocity universal joint rotationally driven by an electric motor, the fixed type constant velocity universal joint including
an outer joint member provided with eight track grooves on an inner spherical surface,
an inner joint member provided with eight track grooves on an outer spherical surface,
eight torque transmitting balls disposed between the track grooves of the outer joint member and the track grooves of the inner joint member,
a cage having a pocket that holds each of the eight torque transmitting balls, an outer spherical surface that fits with the inner spherical surface of the outer joint member, and an inner spherical surface that fits with the outer spherical surface of the inner joint member, and
grease sealed inside the outer joint member, in which
a curvature center of the track grooves of the outer joint member and a curvature center of the track grooves of the inner joint member are offset by an equal distance axially opposite to a joint center,
the grease has an initial consistency of consistency number of 1 to 2 and mixing stability of 390 to 440, and
an axial gap between the pocket and each of the torque transmitting balls held by the pocket is -21 µm or more and -6 µm or less.

### ADVANTAGEOUS EFFECTS OF INVENTION

As described above, in the eight-ball fixed type constant velocity universal joint using the grease having the above characteristics, the pocket gap is set to -21 µm or more and -6 µm or less, and it is therefore possible to obtain a fixed type constant velocity universal joint suitable for an electric vehicle having a small torque loss rate, backlash, and rotation fluctuation rate, and excellent NVH performance.

### BRIEF DESCRIPTION OF DRAWINGS

FIG. 1 is an axial sectional view of a fixed type constant velocity universal joint according to an embodiment of the present invention.
FIG. 2 is a sectional view taken along line P-P of the fixed type constant velocity universal joint.
FIG. 3 is an enlarged view of a vicinity of a ball in FIG. 2.

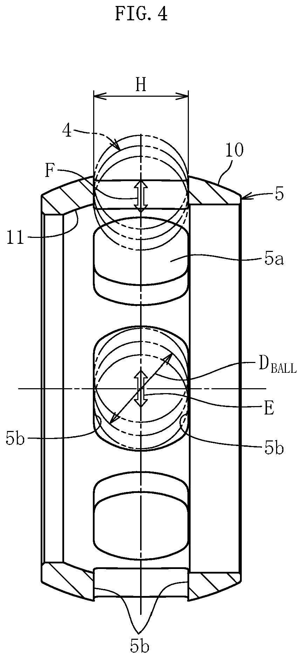

FIG. 4 is an axial sectional view of a cage of the fixed type constant velocity universal joint.

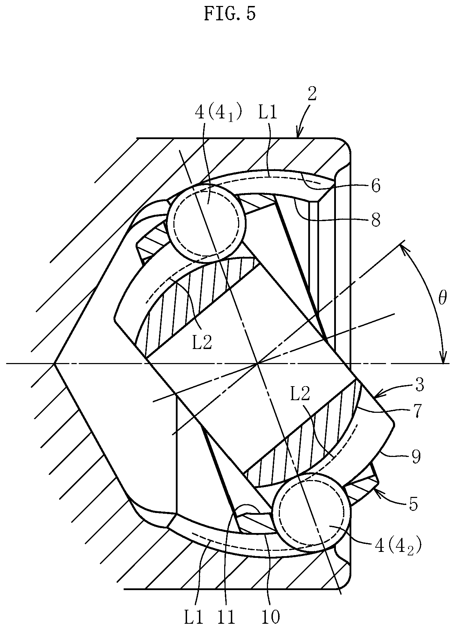

FIG. 5 is an axial sectional view in a state in which the fixed type constant velocity universal joint assumes an operating angle.
FIG. 6 is a graph showing a relationship between a pocket gap and a torque loss rate of an eight-ball fixed type constant velocity universal joint (operating angle of 6°).
FIG. 7 is a graph showing a relationship between the pocket gap and the torque loss rate of the eight-ball fixed type constant velocity universal joint (operating angle of 9°).
FIG. 8 is a graph showing a relationship between the pocket gap and a rotation fluctuation rate of the eight-ball fixed type constant velocity universal joint (operating angle of 6°).
FIG. 9 is a graph showing a relationship between the pocket gap and the rotation fluctuation rate of the eight-ball fixed type constant velocity universal joint (operating angle of 9°).

### DESCRIPTION OF EMBODIMENT

Hereinafter, an embodiment of the present invention will be described with reference to the drawings.

FIGS. 1 and 2 show a drive shaft including a fixed type constant velocity universal joint 1 according to an embodiment of the present invention. The drive shaft is incorporated in an electric vehicle, and includes a fixed type constant velocity universal joint 1 provided on an outboard side (outside in a vehicle width direction), a plunging type constant velocity universal joint (not shown) provided on an inboard side (center side in the vehicle width direction), and an intermediate shaft 12 connecting these components. The fixed type constant velocity universal joint 1 is connected to wheels, and the plunging type constant velocity universal joint is connected to a differential device. The driving force of an electric motor is transmitted to the wheels via the differential device and the drive shaft.

The fixed type constant velocity universal joint 1 is a Rzeppa type constant velocity universal joint, and includes an outer joint member 2, an inner joint member 3, a torque transmitting ball (hereinafter, also simply referred to as a ball) 4, and a cage 5.

The outer joint member 2 integrally includes a cup-shaped mouth 2a and a stem 2b extending from a bottom of the mouth 2a toward the outboard side. The stem 2b is provided with a male spline 21 and a screw 22. By tightening a nut (not shown) to the screw 22 in a state where the male spline 21 is fitted to a hub wheel (not shown) to which the driving wheel is attached, the outer joint member 2 is coupled to the hub wheel so as to be able to transmit torque.

On an inner spherical surface 8 of the mouth 2a of the outer joint member 2, eight curved track grooves 6 extending axially are formed at equal intervals in a circumferential direction. On an outer spherical surface 9 of the inner joint member 3, eight track grooves 7 extending axially are formed at equal intervals in the circumferential direction. Each track groove 6 of the outer joint member 2 and each track groove 7 of the inner joint member 3 radially face each other, and one ball 4 is incorporated between these grooves. The cage 5 that holds the ball 4 is disposed between the inner spherical surface 8 of the outer joint member 2 and the outer spherical surface 9 of the inner joint member 3. An outer spherical surface 10 of the cage 5 is fitted to the inner spherical surface 8 of the outer joint member 2, and an inner spherical surface 11 of the cage 5 is fitted to the outer spherical surface 9 of the inner joint member 3.

When the electric motor is rotationally driven, the inner joint member 3 is rotationally driven via the plunging type constant velocity universal joint and the intermediate shaft 12. Then, the rotation of the inner joint member 3 is transmitted to the outer joint member 2 via the ball 4 at a constant speed, and the outer joint member 2 and the wheels rotate integrally.

Curvature centers of the inner spherical surface 8 of the outer joint member 2 and the outer spherical surface 9 of the inner joint member 3 coincide with a joint center O. On the other hand, a curvature center of A of the track groove 6 of the outer joint member 2 and a curvature center B of the track groove 7 of the inner joint member 3 are offset by an equal distance f1 axially opposite to the joint center O. As a result, when the fixed type constant velocity universal joint 1 assumes the operating angle, the ball 4 is always guided on a plane bisecting an angle formed by both axes of the outer joint member 2 and the inner joint member 3, and the rotation is transmitted at a constant speed between the two axes.

A spherical gap between the inner spherical surface 8 of the outer joint member 2 and the outer spherical surface 10 of the cage 5 and a spherical gap between the outer spherical surface 9 of the inner joint member 3 and the inner spherical surface 11 of the cage 5 are each set within a range of 25 µm to 120 µm. The spherical gap is a diameter difference between spherical surfaces fitted to each other. A PCD gap of the fixed type constant velocity universal joint 1 is set within a range of 5 µm to 50 µm. The PCD gap is a difference between a pitch circle diameter of the track groove 6 of the outer joint member 2 (a diameter of a circle connecting the centers of the balls 4 pressed against the eight track grooves 6) and a pitch circle diameter of the track groove 7 of the inner joint member 3 (a diameter of a circle connecting the centers of the balls 4 pressed against the eight track grooves 7). When an angle between a line connecting a center O4 of the ball 4 and the joint center O and a line connecting the center O4 of the ball 4 and the curvature centers A and B of the track grooves 6 and 7 is θ, the axial offset amount f1 of the curvature centers A and B of the track grooves 6 and 7 with respect to the joint center O satisfies f1 = PCR × sinθ. At this time, θ is set within a range of 5° to 6°.

A female spline 16 is formed in a hole 17 provided at an axial center of the inner joint member 3, and a male spline 19 is formed at an end of the intermediate shaft 12 on the outboard side. The female splines 16 of the inner joint member 3 and the male spline 19 of the intermediate shaft 12 are fitted to each other to be connected so as to be able to transmit torque. The inner joint member 3 and the intermediate shaft 12 are positioned axially by a snap ring 18.

As shown in an enlarged manner in FIG. 3, the ball 4 makes angular contact with the track groove 6 of the outer joint member 2 at two points C12 and C13, and makes angular contact with the track groove 7 of the inner joint member 3 at two points C15 and C16. An angle (contact angle α) formed by a straight line passing through the ball center O4 and each of the contact points C12, C13, C15, and C16 and a straight line passing through the ball center O4 and the joint center O is preferably set to 30° or more.

In the eight-ball type fixed type constant velocity universal joint 1 according to the present embodiment, a ratio r1 (= PCD_{BALL}/D_{BALL}) of a pitch circle diameter (PCD_{BALL}) of the balls 4 to a ball diameter (D_{BALL}) is set within a range of 3.3 ≤ r1 ≤ 5.0, preferably 3.5 ≤ r1 ≤ 5.0. Here, the pitch circle diameter (PCD_{BALL}) of the ball 4 is twice the size of PCR (PCD_{BALL} = 2 × PCR). A length of a line segment connecting the curvature center A of the track groove 6 of the outer joint member 2 and the center O4 of the ball 4 and a length of a line segment connecting the curvature center B of the track groove 7 of the inner joint member 3 and the center O4 of the ball 4 are PCR (see FIG. 1), and are equal to each other. A ratio r2 (= D_{OUTER}/PCD_{SERR}) of an outer diameter (D_{OUTER}) of the outer joint member 2 and a pitch circle diameter (PCD_{SERR}) of the female spline 16 of the hole 17 of the inner joint member 3 is set to a value within a range of 2.5 ≤ r2 ≤ 3.5 (see FIG. 2).

A boot 13 is attached to an opening of the outer joint member 2 (see FIG. 1). In the illustrated example, an end of the boot 13 on a large diameter side is fastened and fixed to an outer peripheral surface of the outer joint member 2 by a boot band 14, and an end of the boot 13 on a small diameter side is fastened and fixed to an outer peripheral surface of the intermediate shaft 12 by a boot band 15. Grease G is sealed in a space covered by the boot 13 (inside the outer joint member 2 and the boot 13).

As the grease G, grease having an initial consistency of consistency number 1 to 2 (consistency of 265 to 340) and a mixing stability of 390 to 440 is used. The grease G includes a base oil, a thickener, and an additive.

As the base oil, a base oil including a paraffinic mineral oil can be used. The paraffinic mineral oil is preferably 70 mass % or more of a total mass of the base oil. The paraffinic mineral oil is rapidly improved in fluidity by being sheared during rotation of the constant velocity universal joint 1, and torque loss can be reduced.

The thickener is preferably a urea compound. Examples of the urea compound include a diurea compound and a polyurea compound.

The diurea compound is obtained, for example, by reaction of a diisocyanate with a monoamine. Examples of the diisocyanate include phenylene diisocyanate, diphenylmethane diisocyanate, octadecane diisocyanate, decane diisocyanate, and hexane diisocyanate, and examples of the monoamine include octylamine, dodecylamine, hexadecylamine, stearylamine, oleylamine, aniline, p-toluidine, and cyclohexylamine. Particularly desirable diurea compounds are represented by the following formula.

R₁NH-CO-HH-C₆H₄-P-CH₂-C₆H₄-P-NH-CO-NHR₂

(where R₁ and R₂ are each an aliphatic hydrocarbon group having 8 to 20 carbon atoms, and R₁ and R₂ may be the same as or different from each other).

The polyurea compound is obtained, for example, by reaction of a diisocyanate with a monoamine. Examples of the diisocyanate and monoamine include those used for producing the diurea compound, and examples of the diamine include ethylenediamine, propanediamine, butanediamine, hexanediamine, octanediamine, phenylenediamine, tolylenediamine, xylenediamine, and diaminodiphenylmethane.

Among the urea compounds described above, a diurea compound having excellent heat resistance and intervening properties is desirable as a thickener.

As the additive, for example, an extreme pressure additive can be used. Specifically, molybdenum dithiocarbamate (MoDTC), molybdenum dithiophosphate (MoDTP), zinc dithiocarbamate (ZnDTC), zinc dithiophosphate (ZnDTP), and the like can be used.

Here, a pocket gap between a pocket 5a of the cage 5 and the ball 4 will be described with reference to FIG. 4. The cage 5 is provided with eight pockets 5a at equal intervals in the circumferential direction. Of inner peripheral surfaces of the pockets 5a, surfaces axially facing each other are pocket surfaces 5b axially holding the ball 4. An axial width (that is, an axial interval between the pocket surfaces 5b axially facing each other) of the pocket 5a before assembling the ball 4 indicated by a two-dot chain line is H. A difference between the axial width H of the pocket 5a and the diameter D_{BALL} of the ball 4 is an initial pocket gap δ (= H - D_{BALL}). In the present embodiment, the initial pocket gap δ is a negative gap, that is, the ball 4 and the pocket surface 5b are in contact with each other with a fastening allowance (which will be described in detail later).

When the constant velocity universal joint 1 rotates in a state where the operating angle is assumed, the outer joint member 2 and the inner joint member 3 obliquely cross each other to change circumferential intervals of the contact points C12, C13, C15, and C16 between the track grooves 6 and 7 adjacent to each other in the circumferential direction and the ball 4. As a result, the ball 4 restrained by the track grooves 6 and 7 move in the circumferential direction with respect to the pocket 5a, and the ball 4 and the pocket surface 5b slide in the circumferential direction (see an arrow E in FIG. 4).

When the constant velocity universal joint 1 assumes the operating angle θ, as shown in FIG. 5, one ball 41 on a plane including the axial centers of both the joint members 2 and 3 moves to a back side of the outer joint member 2, and the other ball 42 on the plane moves toward the opening of the outer joint member 2. At this time, since the track offset amount f1 is provided in the constant velocity universal joint 1, the track grooves 6 and 7 of the outer joint member 2 and the inner joint member 3 are formed such that a groove depth is deeper toward the opening and shallower toward the back side. Therefore, the ball 41 moved to the back side of the outer joint member 2 moves radially inward, and the ball 42 moved toward the opening of the outer joint member 2 moves radially outward. In this manner, the ball 4 moves radially depending on the axial positions of the track grooves 6 and 7 abutting on the ball 4, and the ball 4 radially slides with respect to the pocket surface 5b (see an arrow F in FIG. 4). L1 shown in FIG. 5 is a trajectory of the contact points C12 and C13 (see FIG. 3) between the track groove 6 of the outer joint member 2 and the ball 4, and L2 is a trajectory of the contact points C15 and C16 (see FIG. 3) between the track groove 7 of the inner joint member 3 and the ball 4.

The radial and circumferential sliding of the ball 4 in the pocket 5a does not include a rolling component. In a slider not including the rolling component, grease is less likely to intervene and flowability is greatly affected as compared with a contact portion having the rolling component between the track grooves 6 and 7 and the ball 4. Since the initial consistency of the grease G is the consistency numbers 1 to 2 (mixing consistency 265 to 340), workability at the time of assembling the joint is not impaired. In addition, since the mixing stability is 390 to 440, consistency increases during operation, grease is supplied to a contact portion between components, and torque loss can be reduced.

In the present invention, in the eight-ball Rzeppa type constant velocity universal joint in which the torque loss is reduced by using the grease G, the range of the initial pocket gap has been reviewed in consideration of required characteristics associated with excellent responsiveness and silence for electric vehicles.

When the pocket gap becomes excessively large, noise is increased, and thus NVH performance is deteriorated. In order to suppress such abnormal noise to a level that cannot be detected by an actual vehicle, the pocket gap is only required to be set to 20 µm or less. Therefore, an allowable maximum pocket gap δmax is set to 20 µm.

In an evaluation test by the present inventor assuming use conditions in an actual vehicle, a wear amount of the pocket surface 5b during traveling 100,000 km is about 20 µm at maximum. Therefore, a pocket surface maximum wear amount is set to 20 µm.

From an evaluation result of a torque loss rate by the present inventor (see FIGS. 6 and 7), it is considered that the pocket surface is deformed by about 6 µm by the ball being pressed against the pocket surface at the time of torque transmission. Therefore, a pocket surface deformation amount at the time of torque transmission is set to 6 µm.

An upper limit value of the initial pocket gap δ is calculated by the allowable maximum pocket gap δmax - assumed pocket surface wear amount - pocket surface deformation amount. When the above value is substituted into each item, the upper limit value of the initial pocket gap δ is -6 µm. Therefore, if the initial pocket gap δ is -6 µm or less, that is, if the fastening allowance between the ball 4 and the pocket 5a is 6 µm or more, even when the pocket surface 5b is worn, generation of abnormal noise that can be sensed by an occupant of the electric vehicle can be prevented.

On the other hand, if the pocket gap is excessively small, that is, if the fastening allowance between the ball 4 and the pocket 5a is excessively large, the torque loss becomes excessively large. However, by using the grease G as the grease sealed inside the outer joint member 2, the grease G easily enters between the ball 4 and the pocket 5a, the torque loss is reduced, and the initial pocket gap δ can be made a negative gap (see FIGS. 6 and 7).

However, in a further evaluation test by the present inventor, when the pocket gap is a negative gap, the torque loss rate can be suppressed by using the grease G, but a problem that a rotation fluctuation rate increases at a low operating angle (6°) and a low torque value (200 Nm) occurs (see FIG. 8). This problem is considered to occur because the fastening allowance between the ball and the pocket becomes excessively large, and a movement resistance in the pocket of the ball increases to affect rotational performance of the constant velocity universal joint. Therefore, by setting the initial pocket gap δ to -21 µm or more, the rotation fluctuation rate of the constant velocity universal joint can be suppressed, and NVH performance can be improved.

Since an electric vehicle is excellent in responsiveness and silence as compared with a vehicle driven by an engine, it is required to reduce backlash of a power transmission system including a constant velocity universal joint and further improve the NVH performance. Therefore, as described above, in the eight-ball Rzeppa type fixed type constant velocity universal joint 1, the torque loss rate is suppressed by using the grease G, and the initial pocket gap δ is set within a range of -21 µm to -6 µm, and it is therefore possible to obtain a fixed type constant velocity universal joint suitable for an electric vehicle having a small torque loss, backlash, and rotation fluctuation rate, and excellent NVH performance.

### REFERENCE SIGNS LIST

- 1: Fixed type constant velocity universal joint
- 2: Outer joint member
- 3: Inner joint member
- 4: Torque transmitting ball
- 5: Cage
- 5a: Pocket
- 5b: Pocket surface
- 6, 7: Track groove
- 12: Intermediate shaft
- 13: Boot
- f1: Track offset amount
- G: Grease
- O: Joint center
- O4: Ball center
- α: Contact angle
- δ: Initial pocket gap
- δmax: Allowable maximum pocket gap

## Claims

1. A fixed type constant velocity universal joint (1) rotationally driven by an electric motor, the fixed type constant velocity universal joint (1) comprising:
an outer joint member (2) provided with eight track grooves (6) on an inner spherical surface (8);
an inner joint member (3) provided with eight track grooves (7) on an outer spherical surface (9);
eight torque transmitting balls (4) disposed between the track grooves (6) of the outer joint member (2) and the track grooves (7) of the inner joint member (3);
a cage (5) having a pocket (5a) that holds each of the torque transmitting balls (4), an outer spherical surface (10) that fits with the inner spherical surface (8) of the outer joint member (2), and an inner spherical surface (11) that fits with the outer spherical surface (9) of the inner joint member (3); and
grease sealed inside the outer joint member (2), wherein
a curvature center (A) of the track grooves (6) of the outer joint member (2) and a curvature center (B) of the track grooves (7) of the inner joint member (3) are offset by an equal distance (f1) axially opposite to a joint center (O),
**characterized in that**
the grease has an initial consistency of consistency number of 1 to 2 and mixing stability of 390 to 440, and
an initial pocket gap δ represented by a difference (H-D_{BALL}) between an axial width H of the pocket (5a) and a diameter D_{BALL} of each of the torque transmitting balls (4) is -21 µm or more and -6 µm or less.

2. The fixed type constant velocity universal joint (1) according to claim 1, wherein a rotation fluctuation rate at an operating angle of 6° and an input torque of 200 Nm is 0.1% or less.

## Patentansprüche

1. Feststehendes Gleichlaufgelenk (1), das von einem Elektromotor drehend angetrieben wird, wobei das feststehende Gleichlaufgelenk (1) umfasst:
ein äußeres Gelenkelement (2), das an einer inneren sphärischen Oberfläche (8) mit acht Spurrillen (6) ausgebildet ist;
ein inneres Gelenkelement (3), das an einer äußeren sphärischen Oberfläche (9) mit acht Spurrillen (7) ausgebildet ist;
acht drehmomentübertragende Kugeln (4), die zwischen den Spurrillen (6) des äußeren Gelenkelements (2) und den Spurrillen (7) des inneren Gelenkelements (3) angeordnet sind;
einen Käfig (5), der eine Tasche (5a) aufweist, die jede der
drehmomentübertragenden Kugeln (4) aufnimmt, sowie eine äußere sphärische Oberfläche (10), die an die innere sphärische Oberfläche (8) des äußeren Gelenkelements (2) angepasst ist, und eine innere sphärische Oberfläche (11), die an die äußere sphärische Oberfläche (9) des inneren Gelenkelements (3) angepasst ist; und
Fett, das im äußeren Gelenkelement (2) eingeschlossen ist, wobei
ein Krümmungsmittelpunkt (A) der Spurrillen (6) des äußeren Gelenkelements (2) und ein Krümmungsmittelpunkt (B) der Spurrillen (7) des inneren Gelenkelements (3) um einen gleichen Abstand (f1) axial gegenüber einem Gelenkmittelpunkt (O) versetzt sind,
**dadurch gekennzeichnet, dass**
das Schmierfett eine Anfangskonsistenz der Konsistenzzahl 1 bis 2 und eine Mischstabilität von 390 bis 440 aufweist, und
ein anfänglicher Taschenabstand δ, der durch eine Differenz (H-D_{BALL}) zwischen einer axialen Breite H der Tasche (5a) und einem Durchmesser D_{BALL} jeder der drehmomentübertragenden Kugeln (4) dargestellt wird, -21 µm oder mehr und -6 µm oder weniger beträgt.

2. Das feststehende Gleichlaufgelenk (1) nach Anspruch 1, wobei eine Drehschwankungsrate bei einem Betriebswinkel von 6° und einem Eingangsdrehmoment von 200 Nm 0,1 % oder weniger beträgt.

## Revendications

1. Joint universel homocinétique de type fixe (1) entraîné en rotation par un moteur électrique, le joint universel homocinétique de type fixe (1) comprenant :
un organe extérieur de joint (2) pourvu de huit rainures de guidage (6) sur une surface sphérique intérieure (8) ;
un organe intérieur de joint (3) pourvu de huit rainures de guidage (7) sur une surface sphérique extérieure (9) ;
huit billes de transmission de couple (4) disposées entre les rainures de guidage (6) de l'organe extérieur de joint (2) et les rainures de guidage (7) de l'organe intérieur de joint (3) ;
une cage (5) ayant une poche (5a) qui maintient chacune des billes de transmission de couple (4), une surface sphérique extérieure (10) qui s'ajuste à la surface sphérique intérieure (8) de l'organe extérieur de joint (2), et une surface sphérique intérieure (11) qui s'ajuste à la surface sphérique extérieure (9) de l'organe intérieur de joint (3) ; et
une graisse scellée à l'intérieur de l'organe extérieur de joint (2), dans lequel un centre de courbure (A) des rainures de guidage (6) de l'organe extérieur de joint (2) et un centre de courbure (B) des rainures de guidage (7) de l'organe intérieur de joint (3) sont décalés d'une distance égale (f1) axialement à l'opposé d'un centre de joint (O),
**caractérisé en ce que**
la graisse présente une consistance initiale d'indice de consistance de 1 à 2 et une stabilité de mélange de 390 à 440, et
un jeu initial de poche δ représenté par une différence (H-D_{BALL}) entre une largeur axiale H de la poche (5a) et un diamètre D_{BALL} de chacune des billes de transmission de couple (4) est de -21 µm ou plus et de -6 µm ou moins'.

2. Joint universel homocinétique de type fixe (1) selon la revendication 1, dans lequel un taux de fluctuation de rotation à un angle de fonctionnement de 6° et un couple d'entrée de 200 Nm est de 0,1 % ou moins.
